# EUROPEAN PATENT APPLICATION

(11) **EP 3 970 475 A1**
(43) Date of publication of application: **23.03.2022**
(21) Application number: 19020556.7
(22) Date of filing: 19.09.2020
(51) Int. Cl.: A01G 9/02

(54) **MODULAR SYSTEM FOR VERTICAL GARDEN**

(71) Applicant: Alese Srl, 70124 Bari (BA) (IT)
(72) Inventor: Frigerio, Alessandro, 70121 Bari (BA) (IT)
(74) Representative: Cornacchia, Pierluigi

(57) **Abstract**

The present patent aims to protect an invention whose object is to build a vertical garden through a modular system. Such system is conceived in a way that any kind of surface can be covered of flowers through ad hoc assembled planters of any size easily to remove in case of maintenance therefore creating an easy system for internal and outdoor facade.

Moreover such system is equipped with a lighting and irrigation system.

## Description

This patent application relates to a vertical garden which can be easily tailored upon the needs of the final consumer thanks to its modular system. Such modular vertical garden is characterized by easily assembled panel without limit of size, for indoor and outdoor environments, which main characteristic resides in the fact that the panels are easily removable and can be fitted with lighting equipment.

Moreover the system is characterized by self-supporting anchoring profiles with telescopic feet equipped with brackets for wall or ceiling mounting; a system of adjustable spacers; quick connection and release system for planters which are painted with epoxy powders with water reserve and anti-root net and a quick adjustment system of height and translation on the longitudinal axis. Moreover the irrigation system is provided with an excess water collection.

The field of application of the innovative system is mainly residential, industrial and business landscaping field.

A vertical garden is a technique used to grow plants on a vertically suspended panel by using hydroponics. These unique structures can either be freestanding or attached to a wall. Vertical gardens have been used since ancient civilizations; many modern vertical gardens can last for decades and give a pop of nature into the modern day business.

Vertical gardens are a wonderful alternative to potted plants. While this latter have the advantage of being placed anywhere, they can take up space and require lots of maintenance. However, with vertical gardens there is only one large panel to maintain, and it will provide a lush pop of color to any environment.

Vertical gardens can be placed in hotel lobbies, major corporation headquarters, or even a small residential backyard. Vertical gardens not only look impressive, but will also make you feel more comfortable in your environment by tapping into nature's inherent calming powers.

Vertical gardens not only create a wonderful centerpiece to your interior space, but they help the natural airflow to your environment. These gardens can be made up of many different types of plants such as ivy, succulents, geraniums, fern, etc... being the most popular plant species used in green walls. Vertical gardens are also very space efficient and can fill up any empty space on a wall leaving without limiting any activities in the remaining space.

Vertical gardens work like a natural clean air system and promote a better breathing atmosphere and a healthier environment overall. Plants also help to reduce noise pollution which creates a quieter work environment for building occupants

A garden is commonly found anywhere, due to its innumerous advantages and benefits; a well-cared garden induces sensations of relax and direct contact with nature which have an impact on human well being. At the same time vertical gardens have been conquering space since they are created to alleviate the lack of green areas in urban centers and also to modify the landscape of locations with small spaces.

Their applications occur both on internal walls and on external retaining walls so that vertical garden can be created also inside buildins, shops, restaurant and possibly everywhere.

The systems may include automatic irrigation by dripping or they can be cared for manually, depending on size. As of today the state of the art still experience some disadvantages in the manufactures and maintenance of vertical garden. More specifically the planters are built in different sizes but rarely such dimension fit exactly the needs of the consumer.

The final result is that either the wall or other surface where the vertical garden need to be installed would look not optimally covered or the vertical garden need to be adjusted through some complex assembling works.

The current state of the art anticipates some patent documents that are related to the subject matter under consideration, such as Application n. EP18706312 with the title: "Rucksack Comprising Support for Vertical Garden" which is a very complex system with automated irrigation and nutrition made up of different modules which needs an expert to be assembled.

Another attempt to get the result of the present invention is represented by application n. EP 2983463 with the title "Vertical Garden System" where the inventor made up a collection of pots of the same measure which can of course used many times to reach the vertical or horizontal dimension. On the contrary the present system can be adapted to the wall size or any other surface where positioning the system thanks to the planters which are extruded according to the client's dimensional requests both horizontally and vertically.

Being aware of the prior art, its faults and limitations, the inventor, after some tests and analysis of the market and the consumer needs has designed and conceived his own vertical system made up by completely customized planters which can reach any dimension both horizontally and vertically; the planters, which are painted with epoxy powders with water reserve and anti-root net are easily assembled to the self-supporting anchoring profiles with telescopic feet equipped with brackets for wall or ceiling mounting.

Additional features and advantages of this invention will be better illustrated through an analitycal description of the preferred embodiment but not limited to the attached drawings which are described as follows:
Figure n. 1 illustrates the system which comprises an integrated irrigation system (1); an irrigation water filter with thermal insulation system between planter and plant (2); a planter in extruded aluminum painted with epoxy powders (3); an overflow holes to avoid stagnation of water and to irrigate the underlying planter (4); an integrated LED system (5) with and integrated lower / upper foot (6); a gutter in extruded aluminum and epoxy powder coated (7) a wall anchoring bracket (8); a support for the engagement of the planter to the vertical upright (9) and a junction for upright (10)

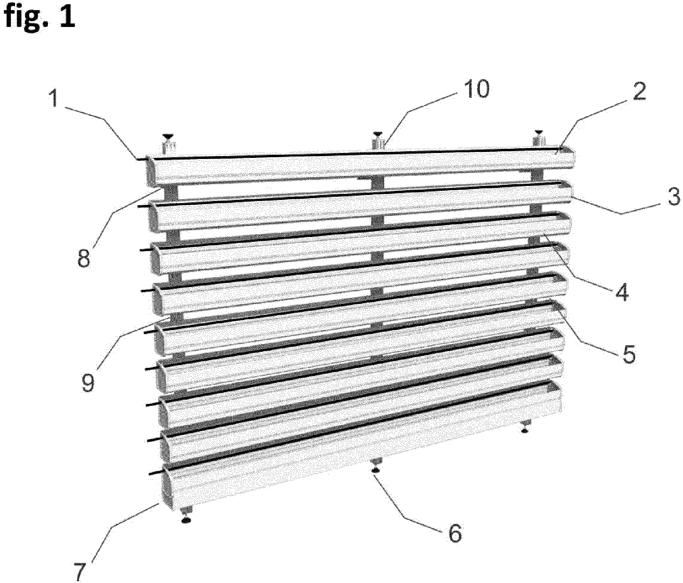

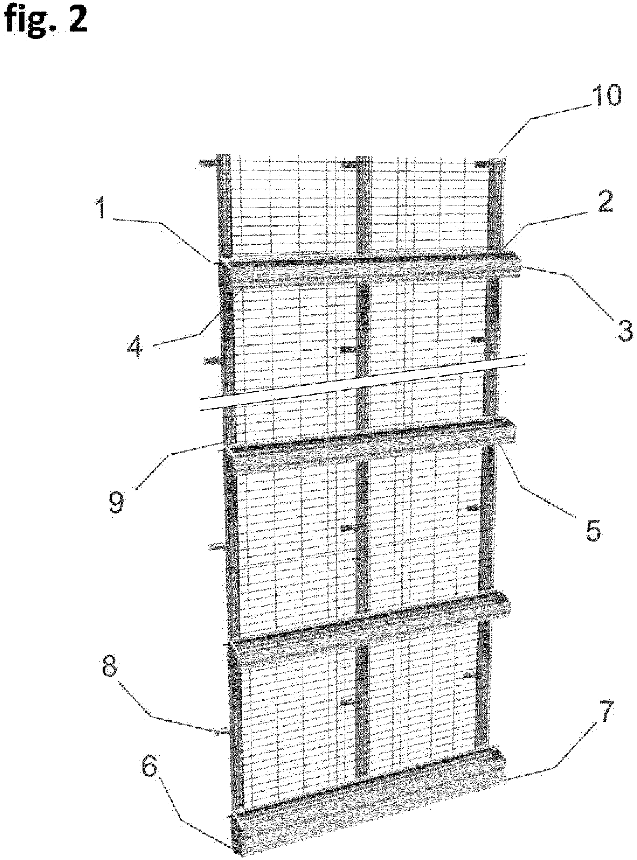

Fig. 2: illustrates a different embodiment where the vertical system differs only with regard to the number of planters maintaining the same characteristics of the other components as showed in the previous figure;

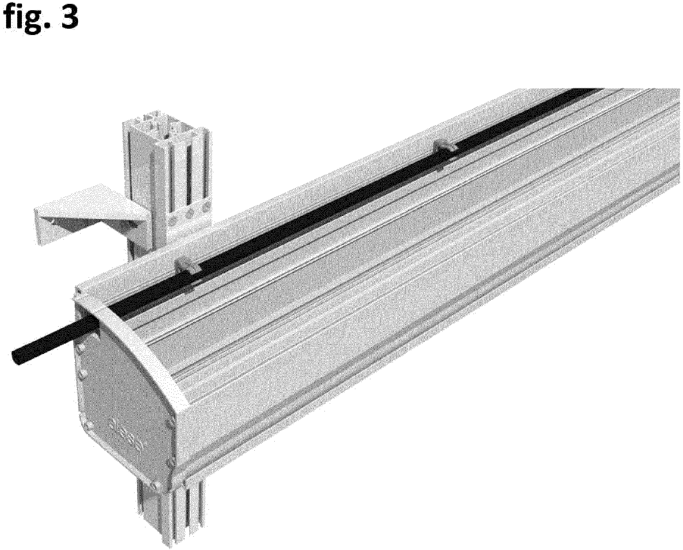

Fig. 3: illustrates the planter with the particular irrigation system (1);

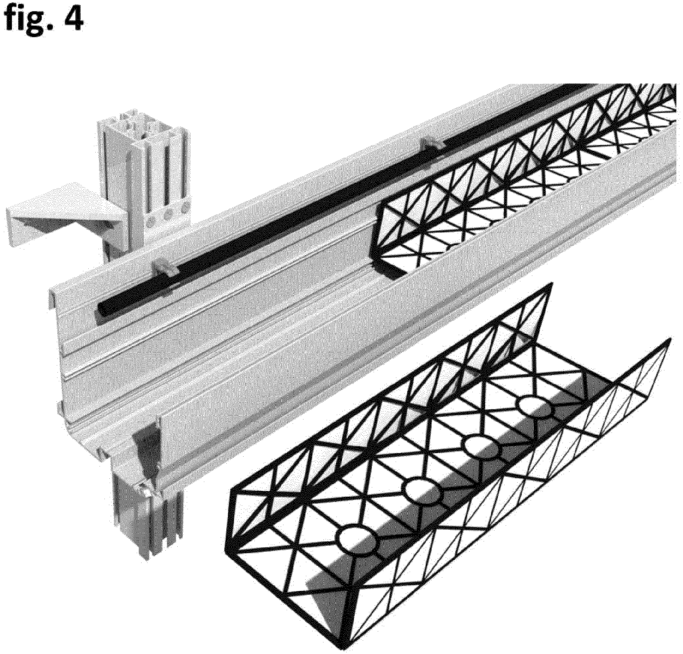

Fig. 4: illustrates the irrigation water filter which is placed between the planter and the plant;

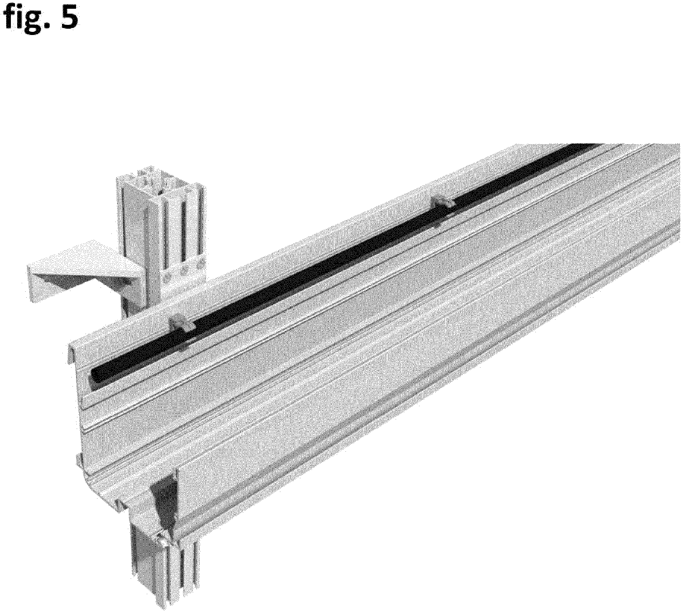

Fig. 5: illustrates the planter which is in extruded aluminum and painted with epoxy powder;

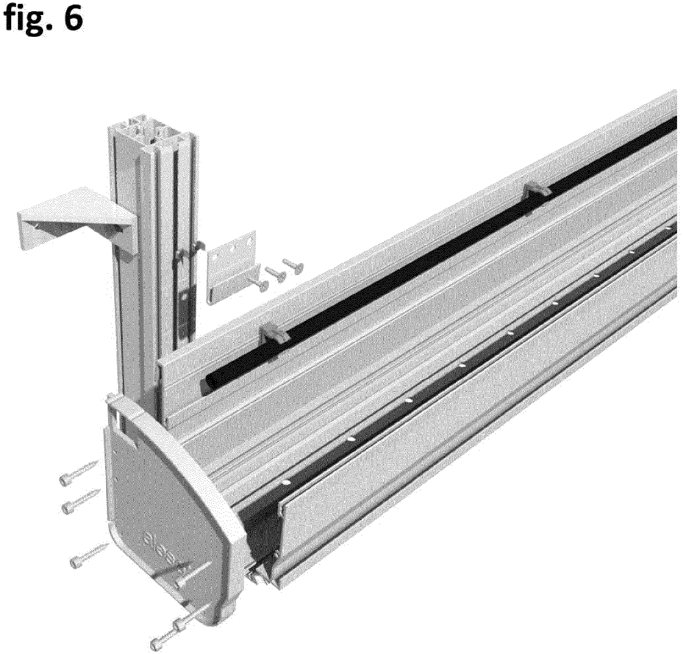

Fig. 6: illustrates the planter together with the front barrier characterized by holes which allows overflow to avoid water stagnation and to irrigate the underlying plants;

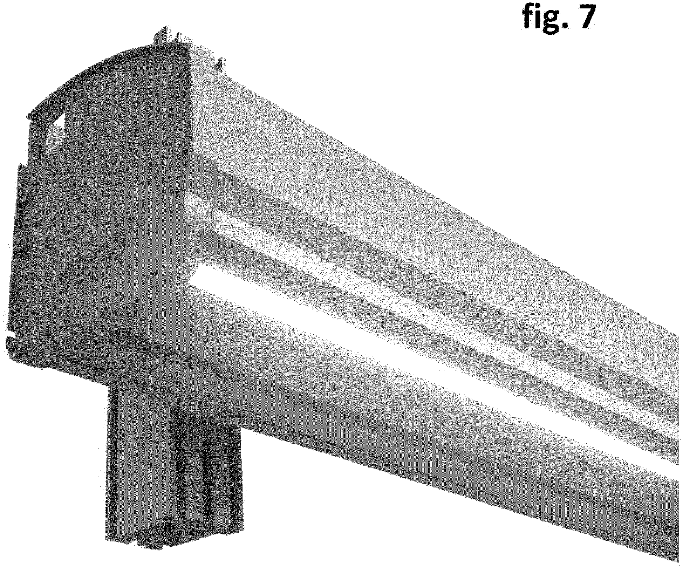

Fig. 7: illustrates the lighting LED system integrated at the bottom of the planter;

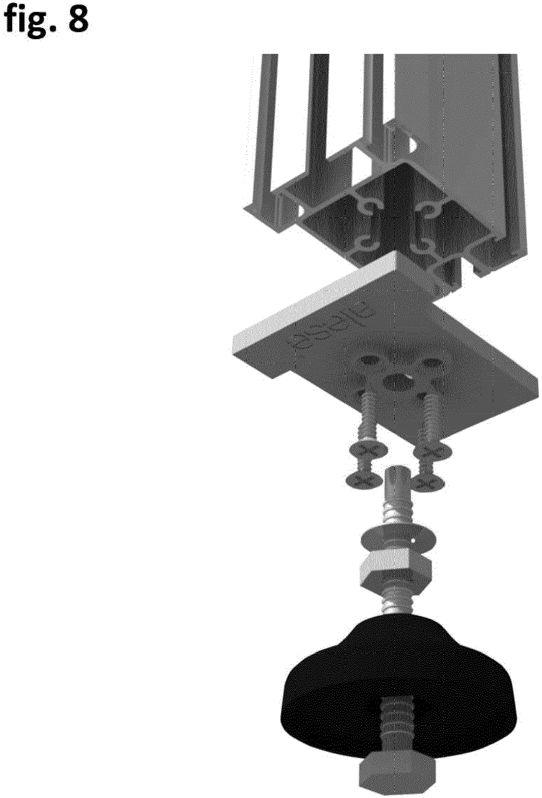

Fig. 8: illustrates the integrated lower / upper foot which can be adjusted depending on the wall/ceiling;

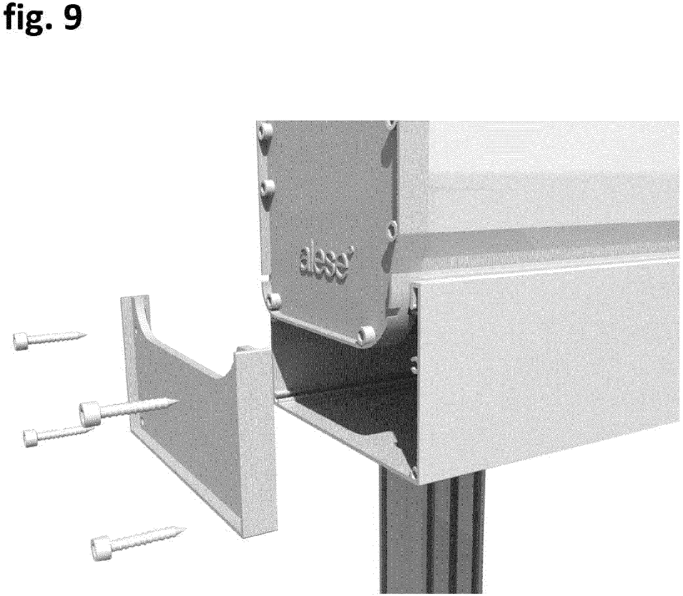

Fig. 9: illustrates a gutter in extruded aluminum and epoxy powder coated (7)

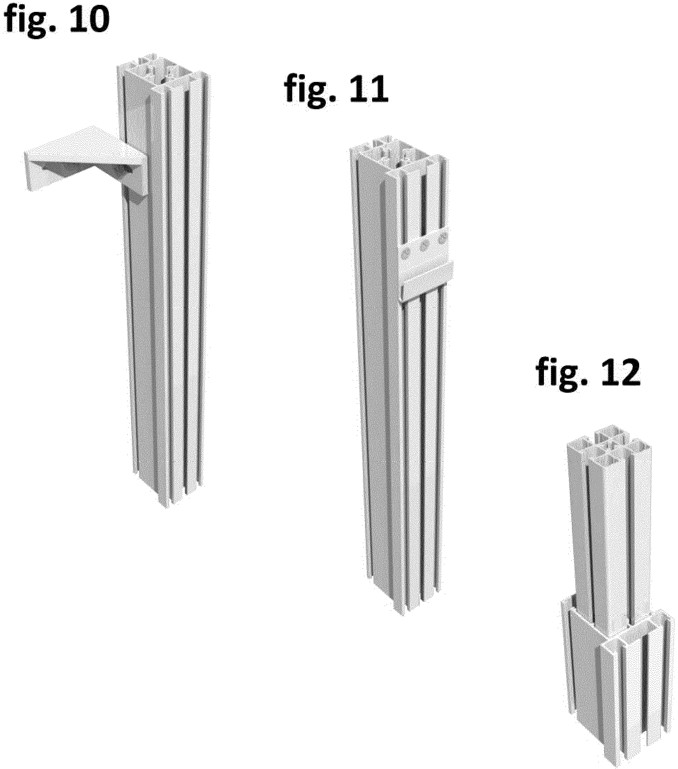

Fig. 10 illustrates a wall anchoring bracket (8) and a support for the engagement of the planter to the vertical upright (9) together with a junction for upright (10).

It has then showed that the system can easily allow a green operator to assemble a vertical garden of any size in consideration of the fact that the planters are extruded in aluminum and therefore can cover any size.

The quick connection and release system for planters allow the operator to intervene on a singular planter without disconnecting the other and with a simple movement.

In conclusion it has been showed that the present invention created a new concept of vertical garden characterized by a modular system which comprise planters which will be manufactured according to the client's needs being of extruded aluminum. The same planters can be quickly adjusted with regard to the height and translate on the longitudinal axis; moreover the system comprise self-supporting anchoring profiles with telescopic feet equipped with brackets for wall or ceiling mounting.

## Claims

1. Modular system for vertical garden according to the former claim **characterised by** self-supporting anchoring profiles with telescopic feet equipped with brackets for wall or ceiling mounting;

2. Modular system for vertical garden according to the former claim **characterised by** planters that can reach any dimension thanks to the aluminum extrusion and by a quick adjustment of the same of the height and translation on the longitudinal axis so that every dimension of a facade can be easily covered;

3. Modular system for vertical garden according to the former claims, **characterised by** an integrated irrigation with excess water collection and anti-root net;

4. Modular system for vertical garden according to the first claim where the planters are equipped with a lighting system inserted at the bottom.

5. Modular system for vertical garden according to the former claims, characterized
